# EUROPEAN PATENT APPLICATION

(11) **EP 4 578 920 A1**
(43) Date of publication of application: **02.07.2025**
(21) Application number: 23220721.7
(22) Date of filing: 29.12.2023
(51) Int. Cl.: C09D 11/322, C09D 11/38

(54) **INK FOR DIGITAL PRINTING**

(71) Applicant: SMALTICERAM UNICER S.P.A., 42014 Roteglia (IT)
(72) Inventor: MENATO, Christian, 41049 Sassuolo (IT); RIVI, Carlo, 42014 CASTELLARANO (IT); DEBBI, Gianfranco, 41043 Formigine (IT); GARZONI, Dario, 42014 Castellarano (IT)
(74) Representative: Cattaneo, Elisabetta

(57) **Abstract**

The present invention relates to a ceramic ink for digital printing comprising: (i) from 0.5% to 50% by weight with respect to the weight of the ceramic ink of a solid inorganic component; (ii) from 40% to 80% by weight with respect to the weight of the ceramic ink of a liquid component comprising a first vehicle comprising at least one of a glycol or a glycol-ether; (iii) from 0.5% to 10% by weight of water with respect to the weight of the water ceramic ink; wherein said inorganic component consists of a plurality of particles having a particle size distribution having D₅₀ less than or equal to 1.5 µm. The ink according to the invention has low dryness and low odour and TOC impacts.

## Description

### FIELD OF THE INVENTION

The present invention relates to an ink for digital printing, preferably for DoD (drop on demand) ink-jet printing on a ceramic substrate before the firing cycle.

### STATE OF THE ART

In the field of ceramic decoration, the inks for graphic decoration allow to make the design on a ceramic support, replacing the traditional decoration provided by screen printing or laser engraving (intaglio method). In particular, inks for graphic decoration by means of ink-jet printing are known which are based on organic solvents, both polar and non-polar.

The known art which is currently most widespread for decorating ceramic artefacts is to use ceramic inks applied by means of ink-jet type digital printers. This type of ink generally consists of a finely ground solid component of an inorganic nature dispersed in a liquid phase, which can comprise organic solvents or water. The solid fraction commonly comprises: inorganic pigments, inorganic calcinates, ceramic raw materials, ceramic frits of various nature, so as to obtain the desired decorative (coloured or textured) effect on the ceramic product.

The formulation of the current ceramic inks involves, for the liquid component, the use of fatty acid esters which ensure excellent technical performance, such as settling stability, dryness, lubrication and rheological stability. These inks are commonly defined as 'traditional solvent-based'.

In recent years, the issue of the environmental impact of these inks has become more pronounced due to the increased popularity and development of digital printing technology, as a result of which the applications and amounts of inks used on ceramic artefacts have also increased in parallel.

In fact, it is well known that one of the fundamental steps in the production of ceramic artefacts is the firing of the latter in kilns at temperatures generally exceeding 700 °C. During these thermal processes, the solvents commonly used in traditional ceramic inks, i.e., fatty acid esters, due to their molecular structure, give rise to the formation of polluting organic compounds and substances with a strong odour impact. In order to overcome these problems, new types of inks have been developed; in particular, two very different paths have been identified and taken.

The first type is that of inks commonly called 'low-emission solvent-based' inks proposed, for example, in patent applications EP3798275A1 and WO2020/065429, in which the liquid component mainly consists of an ester of synthetic origin with a high boiling point. The low-emission solvent-based proposals retain the technical features of traditional solvent-based inks, such as suspension stability, dryness, lubrication, but, even if they improve chimney emissions, they do not solve the problem when significant amounts of ink are applied.

The second type is that of inks defined as "water-based", for example proposed in publication US2020/0255681 or international application WO2016/042097A1. The latter document proposes replacing a part of the organic vehicle with water in high percentages, preferably in the range from 20 to 40% by weight with respect to the total weight of the ink so as to replace a part of the polluting organic vehicle. The water-based proposals solve the problem of odours and air emissions, but from a technical point of view have lesser performance with respect to solvent-based inks. In fact, the presence of high percentages of water leads to an increase in the 'dryness' of the ink, which in the working conditions of ceramic plants with temperatures sometimes above 70 °C can lead to clogging problems of the print head nozzles. A second problem related to the water-based inks is also the lower lubricity of water, which can lead to reduced head life.

There is therefore a clear need to provide an ink for the graphic decoration of ceramic substrates which has a reduced content of apolar organic solvents with respect to traditional inks, but at the same time has the same technical performance.

### SUMMARY OF THE INVENTION

The present invention has achieved such an object by having identified the components and percentages of an ink for digital printing.

Therefore, the present invention relates to a ceramic ink for digital printing comprising:
(i) from 0.5% to 50% by weight of an inorganic solid component with respect to the weight of the ceramic ink;
(ii) from 40% to 80% by weight of a liquid component with respect to the weight of the ceramic ink, the liquid component comprising a first vehicle comprising at least one glycol or one glycol-ether or a mixture thereof;
(iii) from 0.5% to 10% by weight of water with respect to the weight of the water ceramic ink;
wherein said inorganic component consists of a plurality of particles having a particle size distribution having D50 less than or equal to 1.5 µm.

The ink according to the invention therefore comprises an inorganic part found dispersed in a liquid component.

The ink according to the invention has been found to possess the desired technical features, i.e., stability, dryness and lubrication of a traditional solvent-based ink, but with the chimney emissions of pollutants and odours typical of a water-based ink. In order to obtain all these features, the present invention proposes a ceramic ink comprising a solid component of inorganic origin dispersed in a specific amount of organic liquid fraction (vehicle) mainly comprising a glycol, a glycol ether or a mixture thereof. These types of substances in the claimed amount together with a water content of 10% or less with respect to the total weight have allowed to obtain ceramic inks with technical features which are entirely comparable to those of traditional inks present on the market today, but having a lower environmental impact. Advantageously, the inks of the invention allow to obtain, during the thermal firing process of the ceramic artefact to which they are applied, a total combustion reaction with consequent formation of carbon dioxide and water or regardless, in the event of partial combustion, the formation of molecules with zero odour impact, and this thanks to the specific qualitative and quantitative features thereof.

### DETAILED DESCRIPTION OF THE INVENTION

The present invention proposes an ink which combines the technical features of a traditional solvent-based ink such as stability, dryness and lubrication, but with the chimney emissions of pollutants and odours typical of a water-based ink. Therefore, the invention relates a ceramic ink for digital printing comprising:
(i) from 0.5% to 50% by weight of an inorganic solid component with respect to the weight of the ceramic ink;
(ii) from 40% to 80% by weight of a liquid component with respect to the weight of the ceramic ink, the liquid component comprising a first vehicle comprising at least one glycol or one glycol-ether or a mixture thereof;
(iii) from 0.5% to 10% by weight of water with respect to the weight of the ceramic ink;
wherein said inorganic component consists of a plurality of particles having a particle size distribution having D50 less than or equal to 1.5 µm.

According to the invention, the ink comprises a component (i) in turn comprising from 0.5% to 50% by weight of a solid inorganic component with respect to the weight of the ceramic ink.

Said solid inorganic component is preferably selected from the group consisting of one or more inorganic pigments, one or more ceramic raw materials, one or more ceramic frits, and a mixture thereof.

In the present invention, when the term 'inorganic pigment' is used, it means any synthetic or natural inorganic compound capable of remaining unaltered and providing a colouring to the ceramic artefact even after the thermal treatment.

Preferably said one or more inorganic pigments is a crystalline structure, more preferably selected from the group consisting of zirconium silicate, olivine, sphene, spinels, iron oxide, titanium oxide, chromium oxide, cobalt oxide perovskite and haematite. In a preferred embodiment said one or more organic pigments being optionally doped with one or more cations such as, for example, praseodymium, vanadium, cobalt, iron, chromium, cerium.

The one or more inorganic raw materials as solid inorganic component (i) can be any chemical compound other than ceramic pigments and ceramic frits. Examples of ceramic materials are, but are not limited to, sodium feldspar, potassium feldspar, lithium feldspar, alumina, kaolinite clays, illite clays, zirconium silicate, zinc oxide, tungsten oxide, dolomite, kaolin, quartz, barium oxide, mullite, bentonite, wollastonite, tin oxide, nepheline, bismuth oxide, boron oxide, colemanite, calcium carbonate, aluminium phosphate, manganese oxide, spodumene, talc, magnesium oxide, cristobalite, rutile and anatase.

The one or more ceramic frits is a glass and can consist of natural or synthetic products such as oxides, silicates, carbonates, aluminosilicates, borates, of calcium oxides, silicon, zinc, bismuth, boron, potassium, zirconium, cerium.

The solid inorganic component (i) and the liquid component (ii) form a suspension, wherein the solid inorganic component generally consists of an incoherent mass of solid particles, typically very small, which are dispersed within the liquid component. In particular, in order to be able to work optimally in the main digital ink-jet ceramic printers, according to the invention the solid inorganic component consists of an incoherent mass of solid particles having an average diameter less than 1.5 µm, viz. the ceramic ink has a particle size distribution with D50 less than or equal to 1.5 µm. To obtain these or other features, the ceramic ink can be obtained by performing a first dry grinding of the solid component and a subsequent ultra-grinding of the solid fraction after mixing it with the liquid component and any chemical additives. According to the invention, the ceramic ink also comprises from 40% to 80% by weight of a liquid component (ii) with respect to the weight of the ceramic ink, the liquid component comprising a first vehicle comprising at least one glycol or one glycol-ether or a mixture thereof.

Preferably said liquid component (ii) comprises said first vehicle selected from the group consisting of monoethylene glycol, diethylene glycol, triethylene glycol, tetraethylene glycol, polyethylene glycols with molecular weights in the range from 200 to 4000 Da, monopropylene glycol, dipropylene glycol, tripropylene glycol, polypropylene glycols with molecular weights in the range from 200 to 4000 D, methyl ether of propylene glycol and the isomers thereof, methyl ether of dipropylene glycol and the isomers thereof, methyl ether of tripropylene glycol and the isomers thereof, monoethyl ether of diethylene glycol, dimethyl ether of diethylene glycol, dimethyl ether of triethylene glycol, diethylene glycol monomethyl ether, triethylene glycol monomethyl ether, butyl glycol, butyldiglycol and polybutyl glycol.

Said component (ii) is present in the ink according to the invention in an amount from 40 to 80% with respect to the total weight of the ink.

The liquid component (ii) can also contain a second vehicle selected from the group consisting of alcohol, glycerol and derivatives thereof, lactates, aldehydes, ketones, linear or branched aliphatic hydrocarbons, aromatic hydrocarbons, oils, alkyl carbonates, esters, polymers such as polyacrylates, polymethacrylates and block copolymers. Preferably said second vehicle of the component (ii) is present in said component (ii) in an amount of at most 20% by weight of the ink, preferably in an amount equal to or less than 10%.

According to the invention, water is present in the ink as component (iii) in an amount from 0.5% to 10% by weight of water with respect to the weight of the ceramic ink; preferably said percentage of water contained in the ink is greater than 0.5% and less than or equal to 5% so as to approximate the lubrication features and reduce the dryness parameter to the levels of solvent-based inks.

According to another aspect of the invention, the ink in question can contain one or more additives so as to adjust physical and rheological parameters for the proper operation within digital printers. For example, additives can be selected from the group consisting of dispersing agents, wetting agents, surfactants, viscosity regulators, rheology modifiers, suspending agents, antifoaming agents, humectants, antibacterial agents, adhesion promoters, tackifiers and dyes.

Among the additives it can be mentioned the dispersing agents selected from the group consisting of polyacrylate polymers and derivatives thereof, polyurethane polymers and derivatives thereof, acrylate/maleate copolymers and derivatives thereof, styrene/maleic anhydride (SMA) resins, alkylenpolyphosphonic esters, phosphoric acid esters, salts of carboxylic and hydrocarboxylic acids and derivatives thereof, esters of carboxylic or hydrocarboxylic acids and derivatives thereof, amide polyesters and derivatives thereof.

According to the invention, the ink described herein has innovative and surprising aspects such as:
- drying properties in the range from 1% to 20%, preferably from 2% to 8%, more preferably from 3% to 7%;
- an odour impact of the fumes deriving from combustion in the firing step in the range from 100 to 10000 ouE/m³, preferably from 500 to 2500 ouE/m³, more preferably from 1000 to 1800 ouE/m³, as measured according to UNI EN 13725:2022
- an amount of TOC present in the smoke emitted from the ceramic kiln in the range from 2 to 20 mg/Nm³, preferably from 4 to 13 mg/Nm³, more preferably from 7 to 10 mg/Nm³, according to standard UNI EN12619-1:2013.

All these advantageous and surprising aspects will be evident from the experimental part of the present invention.

Dryness is conventionally assessed using a thermobalance which allows to measure the weight loss of an ink sample at a given temperature for a given period of time (temperature of 75 °C for 2h). The lower the percentage weight loss at the end of the test, the better the performance of the ceramic ink in application.

The odour impact is assessed in certified laboratories on flue gas samples taken in accordance with the standard UNI EN 13725:2022. The higher the concentration of odour units (ouE/m³) found in the sample under investigation, the greater the risk of reaching the legal limits set by local regulations.

The Total Organic Carbon value is a data used to check the fumes resulting from the combustion processes so as to determine the level of completeness of combustion. In the event of incomplete combustion, there will be a significant presence of hydrocarbons which can lead to a certain level of harmfulness.

The method for determining the amount of TOC present in the smoke emitted from the ceramic kiln is based on the standard UNI EN12619-1:2013. The concentration of hydrocarbons present can be determined (mg/Nm³) by means of the Flame Ionisation Detector (FID): this value is also limited by stringent regulations, which thus also indirectly limit the amounts of ink applicable to the ceramic artefact.

The invention is now described in relation to the preparation examples and evaluation evidence given to support the inventive results of the composition according to the invention.

### EXPERIMENTAL PART

### EXAMPLE 1 - Preparation of the ink of the invention:

The following ingredients were used in the respective amounts listed below:
Calcium Carbonate: inorganic component in amounts equal to 33%
Liquid component in amounts equal to 56%
Dispersing agent (carboxylic-copolymer acidic salt in water with a water content of 40% by weight of the dispersing agent) sold under the trade name Digicer D148 in amounts equal to 6.5%
Water in amounts equal to 4.5%
wherein the liquid component was Triethylene Glycol (TEG).

The inorganic component was first dispersed in the liquid component and, afterwards, the suspension thus obtained was ground in ball mills until the desired particle size distribution was obtained, specifically the D50 had to be less than 1.5 µm.

### EXAMPLE 2 - Preparation of the ink of the invention

Following the same operating sequence using the ingredients indicated below, the ink of the invention was obtained.
Calcium Carbonate: inorganic component in amounts equal to 33%
Liquid component in amounts equal to 60.5%
Dispersing agent (carboxylic-copolymer acidic salt in water with a water content of 40% by weight of the dispersing agent) sold under the trade name Digicer D148 in amounts equal to 5.7%
Water in amounts equal to 0.8%
wherein the liquid component was Diethylene Glycol (DEG).

### EXAMPLE 3 - - Preparation of the ink of the invention

Following the same operating sequence using the ingredients indicated below, the ink of the invention was obtained.
Boron frit: inorganic component in amounts equal to 13%
Al-Co blue pigment: inorganic component in amounts equal to 26%
Liquid component in amounts equal to 51%
Dispersing agent (mixture of polyvinyl copolymers with a water content of 60% by weight of the dispersing agent) sold under the trade name Solsperse W320 in amounts equal to 7%
Water in amounts equal to 2%
Surfactant in amounts equal to 1%
wherein the liquid component was Diethylene Glycol (DEG)

### EXAMPLE 4 - Preparation of the ink of the invention

Following the same operating sequence using the ingredients indicated below, the ink of the invention was obtained.
Potassium feldspar: inorganic component in amounts equal to 17%
Zirconium oxide: inorganic component in amounts equal to 28%
Liquid component:
   - First vehicle in amounts equal to 35%
   - Second vehicle in amounts equal to 8%
wherein the first vehicle is dipropylene glycol methyl ether (DPM) and the second vehicle is 2-ethylhexyl laurate
Dispersing agent (carboxylic-copolymer acidic salt in water with a water content of 40% by weight of the dispersing agent) sold under the trade name Digicer D148 in amounts equal to 10%
Water in amounts equal to 2%

### EXAMPLE 5 Evaluation of ink of the invention

The ink of the invention prepared according to example 1 was tested for dryness, odour impact and TOC with respect to comparative inks as indicated in Table 1 and below:
- traditional solvent-based ink: wherein the liquid part was composed of longchain fatty acid esters of natural origin or hydrocarbon mixtures.
- low-emission solvent-based ink: wherein the liquid component was of a synthetic organic nature, designed to lower odour and pollutant emissions.
- water-based ink: wherein the liquid part consisted of a part of water greater than 10% of the total weight of the ink and a part of water-soluble solvents.
- ink subject-matter of the invention (ink of example 1)

The dryness (%wt loss) was measured as indicated above, holding the samples at a temperature of 75 °C for 2h.

The odour impact (ouE/m³) was evaluated according to standard UNI EN 13725:2022.

The determination of the amount of TOC present in the smoke emitted from the ceramic kiln was evaluated according to the standard UNI EN12619-1:2013. TOC (mg/Nm³).

The odour impact tests and TOC analysis were conducted by applying an amount of ink equal to 50g/m² directly onto the ceramic substrate, which was then subjected to thermal treatment in a porcelain stoneware firing cycle at a temperature of up to 1215°C for 50 minutes.

The results are shown in Table 1 below:

**Table 1:**

| Ink type | Dryness (%wt loss) | Odour impact (ouE/m³) | TOC (mg/Nm³) |
|---|---|---|---|
| Traditional solvent base | 0.5-1.5 | 10,000-20,000 | 35-42 |
| Low-emission solvent base | 1-3 | 5,000-8,000 | 30-36 |
| Water Base | 25-40 | 800-1,500 | 5-8 |
| Ink of the invention | 3-7 | 1,000-1,800 | 7-10 |

As can be seen from the table above, the ink of the invention advantageously exhibited dryness in the order of a traditional or low-emission solvent-based ink, but with the chimney emissions of pollutants and odours typical of a water-based ink.

## Claims

1. A ceramic ink for digital printing comprising:
(i) from 0.5% to 50% by weight of an inorganic solid component with respect to the weight of the ceramic ink
(ii) from 40% to 80% by weight of a liquid component with respect to the weight of the ceramic ink, the liquid component comprising a first vehicle comprising at least one glycol or one glycol-ether, and
(iii) from 0.5% to 10% by weight of water with respect to the weight of the water ceramic ink;
wherein said inorganic component consists of a plurality of particles having a particle size distribution having D₅₀ less than or equal to 1.5 µm.

2. The ink according to claim 1, wherein said inorganic solid component (i) is selected from the group consisting of one or more inorganic pigments, one or more ceramic raw materials, one or more ceramic frits and mixtures thereof.

3. The ink according to claim 2, wherein said one or more inorganic pigments is a crystalline structure selected from the group consisting of zirconium silicate, olivine, sphene, spinels, iron oxide, titanium oxide, chromium oxide, cobalt oxide, perovskite and haematite.

4. The ink according to claim 2, wherein said one or more inorganic raw materials is selected from the group consisting of sodium feldspar, potassium feldspar, lithium feldspar, alumina, kaolinite clays, illite clays, zirconium silicate, zinc oxide, tungsten oxide, dolomite, kaolin, quartz, barium oxide, mullite, bentonite, wollastonite, tin oxide, nepheline, bismuth oxide, boron oxide, colemanite, calcium carbonate, aluminium phosphate, manganese oxide, spodumene, talc, magnesium oxide, cristobalite, rutile and anatase.

5. The ink according to claim 2, wherein said one or more ceramic frits is selected from glass and preferably consists of natural or synthetic products such as oxides, silicates, carbonates, aluminosilicates, borates, calcium oxides, silicon, zinc, bismuth, boron, potassium, zirconium, cerium, and mixtures thereof.

6. The ink according to any one of claims 1 to 5, wherein the inorganic solid component consists of an incoherent mass of solid particles dispersed within the liquid component.

7. The ink according to one said first vehicle selected from the group consisting of monoethylene glycol, diethylene glycol, triethylene glycol, tetraethylene glycol, polyethylene glycols with molecular weights in the range from 200 to 4000 Da, monopropylene glycol, dipropylene glycol, tripropylene glycol, polypropylene glycols with molecular weights in the range from 200 to 4000 Da, monopropylene glycol, dipropylene glycol, tripropylene glycol, polypropylene glycols with molecular weight in the range of 200 to 4000 D, propylene glycol methyl ether and its isomers, dipropylene glycol methyl ether and its isomers, tripropylene glycol methyl ether and its isomers, diethylene glycol monoethyl ether, ether diethylene glycol dimethyl ether, triethylene glycol dimethyl ether, diethylene glycol monomethyl ether, triethylene glycol monomethyl ether, butyl glycol, butyl diglycol and polybutyl glycol.

8. The ink according to any one of claims 1 to 7, wherein the water is present in the ink as component (iii) in an amount from greater than 0.5% to less than or equal to 5%.

9. The ink according to any one of claims 1 to 8, wherein said liquid component (ii) comprises a second vehicle selected from the group consisting of alcohol, glycerol and derivatives thereof, lactates, aldehydes, ketones, linear or branched aliphatic hydrocarbons, aromatic hydrocarbons, oils, alkyl carbonates, esters, polymers such as polyacrylates, polymethacrylates and block copolymers.

10. The ink according to any one of claims 1 to 9, wherein said second vehicle of the component (ii) is present in said component (ii) in an amount of at most 20% by weight of the ink, preferably in an amount equal to or less than 10%.

11. The ink according to any one of claims 1 to 10, wherein said ink comprises at least one additive selected from the group consisting of a dispersing agent, a wetting agent, a surfactant, a viscosity regulator, a rheology modifier, a suspending agent, an antifoaming agent, a humectant, an antibacterial agent, an adhesion promoter, a tackifier and a dye.

12. The ink according to any one of claims 1 to 11 , wherein the ink has:
- drying properties in the range from 1% to 20%, preferably from 2% to 8%, more preferably from 3% to 7%,;
- an amount of TOC present in the smoke emitted from the ceramic kiln in the range from 2 to 20 mg/Nm³, preferably from 4 to 13 mg/Nm³, more preferably from 7 to 10 mg/Nm³, according to standard UNI EN12619-1:2013.
